(19) **Europäisches Patentamt / European Patent Office / Office européen des brevets**

(11) **EP 2 980 030 B1**

(12) **EUROPEAN PATENT SPECIFICATION**

(45) Date of publication and mention
of the grant of the patent:
**17.10.2018 Bulletin 2018/42**

(51) Int Cl.:
***C23F 11/18*** *(2006.01)*  ***C23F 11/173*** *(2006.01)*
***C23F 11/08*** *(2006.01)*  ***C02F 5/10*** *(2006.01)*
***C23F 14/02*** *(2006.01)*  *C02F 103/02* *(2006.01)*

(21) Application number: **14772925.5**

(22) Date of filing: **27.03.2014**

(86) International application number:
**PCT/JP2014/058757**

(87) International publication number:
**WO 2014/157462 (02.10.2014 Gazette 2014/40)**

(54) **METHOD AND AGENT FOR TREATING WATER IN COOLING WATER SYSTEM**

VERFAHREN UND MITTEL ZUR BEHANDLUNG VON WASSER IN EINEM KÜHLWASSERSYSTEM

MÉTHODE ET AGENT DE TRAITEMENT D'EAU DANS UN CIRCUIT D'EAU DE REFROIDISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2013 JP 2013066786**

(43) Date of publication of application:
**03.02.2016 Bulletin 2016/05**

(73) Proprietor: **Kurita Water Industries Ltd.**
**Nakano-ku, Tokyo 164-0001 (JP)**

(72) Inventors:
• **TERAMOTO, Tetsuya**
**Tokyo 164-0001 (JP)**

• **KIKKAWA, Takashi**
**Tokyo 164-0001 (JP)**

(74) Representative: **TBK**
**Bavariaring 4-6**
**80336 München (DE)**

(56) References cited:
| | |
|---|---|
| **CN-A- 1 621 362** | **CN-A- 102 730 848** |
| **JP-A- S5 992 097** | **JP-A- S57 174 470** |
| **JP-A- S58 171 576** | **JP-A- S59 105 892** |
| **JP-A- 2000 005 742** | **JP-A- 2003 010 886** |
| **JP-A- 2003 010 886** | **JP-A- 2003 329 388** |
| **JP-A- 2004 211 137** | |

## Description

Field of Invention

The present invention relates to a method and an agent for treating water in a cooling water system equipped with an iron-made facility, both of which prevent the corrosion of iron and effectively prevent the formation of calcium-containing scales, such as calcium carbonate and calcium tungstate.

Background of Invention

Examples of known methods for preventing corrosion in a cooling water system include methods that involve the use of an oxide- or precipitate-based anticorrosive coating and methods that involve deoxidization. The anti-corrosion methods that involve an oxide-based coating include those in which a nitrite salt, a molybdate salt, or a tungstate is used. The anti-corrosion methods that involve a precipitate-based coating include those in which a phosphate salt or a zinc salt is used. The anti-corrosion methods that involve deoxidization include those in which hydrazine is used.

The anti-corrosion technologies in which a tungstate is used include technologies that involve the use of the tungstate in combination with a silicate or a carbonate.

Patent Literature 1 proposes the use of a tungstate in combination with silicic acid. Patent Literature 2 proposes the use of a tungstate in combination with sodium carbonate or potassium carbonate.

Examples of methods for preventing the formation of scales in a cooling water system include methods that involve the use of a carboxylic polymer, an acrylic polymer, a maleic polymer, phosphonic acid, or any other substance having a scale-dispersing effect.

To provide anti-scaling technologies for situations where a tungstate is used as an anticorrosive agent, methods have been proposed in which the tungstate is used in combination with a carboxylic polymer. Patent Literature 1 proposes the use of a tungstate in combination with a silicate and a carboxylic polymer in a water system in which calcium ions are present.

CN1621362 (A) describes a composite phosphate-free scale inhibiting corrosion inhibitor for treating circular cooling water consists of scale inhibitor and corrosion inhibitor. The scale inhibitor consists of one or several of PASP, PVA, oxidized starch, polyacrylic acid, acrylic acid/acrylate copolymer and acrylic acid/acrylate copolymer with sulfo radical. The corrosion inhibitor consists of one or several of sodium salt/potassium salt/ammonium salt of organic salt, sodium/potassium/ammonium borate, nitrous organic matter, soluble molybdenate, soluble tungstate, soluble nitrate, soluble nitrite and soluble zinc salt.

CN102730848 (A) discloses a composite anti-incrustation corrosion inhibiter, the composite anti-incrustation corrosion inhibiter comprises a) water-soluble molybdate and/or water-soluble tungstate; b) two different salts in water-soluble borate, water-soluble gluconate and water-soluble silicate; c) at least an organic phosphonic acid; and d) at least an anti-incrustation dispersant, wherein the anti-incrustation dispersant is a polymer containing carboxylic acid groups.

JP2003329388 (A) mentions a tungsten acid and/or its salt and water soluble silicate.

List of Literature

Patent Literature

    Patent Literature 1: Japanese Patent No. 3925296
    Patent Literature 2: Japanese Patent No. 4704835

Summary of Invention

In a cooling water system equipped with an iron-made facility, a reduced cooling efficiency caused by water leakage associated with corrosion of the facility or by scaling on a heating surface leads to economically serious problems, such as a reduced efficiency in the production of the product and an emergency shutdown of the plant. For this reason, many anti-corrosion methods for metals and many anti-scaling methods have been proposed as mentioned above.

However, molybdic acid, zinc salts, and hydrazine are chemicals subject to the PRTR Act, and nitrites, which are highly toxic to fish, may have adverse human health or environmental effects. The use of phosphates, contributors to eutrophication, at high concentrations is restricted because of their adverse environmental effects.

Tungstates are of low environmental impact and are not regulated by the law. Tungstates, however, are relatively expensive substances and thus are difficult to use at high concentrations. For this reason, methods have been proposed for enhancing the anti-corrosion effect by using a tungstate in combination with an alkali component, such as a silicate or a carbonate, to increase pH as mentioned above. Increasing pH by adding a hardness component such as a silicate or a carbonate, however, disadvantageously accelerates the formation of scales in a water system containing calcium ions.

The polymer used as an anti-scaling component may accelerate corrosion by inhibiting the formation of the coating.

For these reasons, it is now impossible with the prior art to prevent both the corrosion of iron and the formation of scales to a sufficient extent in a cooling water system equipped with an iron-made facility.

The present invention solves the foregoing existing problems, and its object is to provide a method and an agent for treating water in a cooling water system equipped with an iron-made facility, both of which prevent the corrosion of iron and effectively prevent the formation of calcium-containing scales.

The inventors found through extensive research for a solution to the above problems that the use of a tungstic acid (tungstate) ("a tungstic acid (tungstate)" as used herein denotes "tungstic acid and/or a tungstate ") as an anti-corrosion component for iron in combination with a particular acrylic copolymer as defined in claim 1 as an anti-scaling component that does not accelerate corrosion improves both of the anti-corrosion effect for iron material and the anti-scaling effect.

The present invention has been accomplished based on the above findings, and the summary thereof is as follows:

[1] A method for treating water in a cooling water system equipped with an iron-made facility, the method comprising a process of adding tungstic acid and/or a tungstate; and

a copolymer

of acrylic acid and 2-acrylamido-2-methylpropanesulfonic acid, the copolymer having an acrylic acid monomer content of 97% by mole or more (hereinafter collectively referred to as "the acrylic copolymer"), to the cooling water system,

wherein the acrylic copolymer and the tungstic acid and/or the tungstate are added to the cooling water system to make a ratio by weight of a quantity of the acrylic copolymer to a quantity of the tungstic acid and/or the tungstate fall within a range of 1:5 to 1:1500, wherein the

tungstic acid and/or the tungstate is maintained at a concentration of 5 to 600 mg/L in the cooling water system, and the acrylic copolymer is maintained at a concentration of 0.5 to 20 mg/L in the cooling water system.

[2] The method according to [1] for treating water in a cooling water system, wherein the tungstic acid and/or the tungstate is maintained at a concentration of 15 to 150 mg/L in the cooling water system, and the acrylic (co)polymer is maintained at a concentration of 0.5 to 5.0 mg/L in the cooling water system.

[3] The method according to [1] or [2] for treating water in a cooling water system, wherein a weight-average molecular weight of the acrylic copolymer is in a range of 5,000 to 15,000.

[4] The method according to any one of [1] to [3] for treating water in a cooling water system, wherein the cooling water system has a calcium hardness of 30 to 300 mg-$CaCO_3$/L and a pH of 7 to 9.

[5] An agent for treating water in a cooling water system equipped with an iron-made facility, the agent comprising tungstic acid and/or a tungstate; and

a copolymer of acrylic acid and 2-acrylamido-2-methylpropanesulfonic acid, the copolymer having an acrylic acid monomer content of 97% or more (hereinafter collectively referred to as "the acrylic copolymer"),

wherein the acrylic copolymer and the tungstic acid and/or the tungstate are contained to make a ratio by weight of the acrylic copolymer to the tungstic acid and/or the tungstate fall within a range of 1:5 to 1:1500.

[6] The agent according to [5] for treating water in a cooling water system, wherein a weight-average molecular weight of the acrylic copolymer is in a range of 5,000 to 15,000.

Advantageous Effects of Invention

The present invention provides excellent anti-iron corrosion and anti-scaling effects in a cooling water system equipped with an iron-made facility.

The known technologies in which a tungstic acid (tungstate) is used may cause scale-related damage when applied to a water system containing calcium ions. In the present invention, however, the use of an acrylic copolymer that does not accelerate corrosion as an anti-scaling component improves the anti-corrosion effect for iron material and the anti-scaling effect on calcium-containing scales.

The present invention prevents the corrosion of iron and scale-related damage in a cooling water system equipped with an iron-made facility and keeps the cooling efficiency of the cooling water system and the efficiency in the production of the product high, thereby allowing long-term stable operation of the plant to be maintained.

Description of Embodiments

The following describes some embodiments of the present invention in detail.

[The mechanism of function of the invention]

The present invention involves the use of a tungstic acid (tungstate) as an anti-corrosion component for iron in combination with a particular acrylic copolymer as an anti-scaling component that does not accelerate corrosion in a cooling water system equipped with an iron-made facility. The tungstic acid (tungstate) prevents the corrosion of iron by forming an oxide coating on the surface of iron, and the acrylic copolymer prevents the formation of calcium-containing scales without accelerating corrosion.

[Tungstic acid (tungstate)]

Examples of the tungstic acid used in the present invention include ortho-tungstic acid ($H_2WO_4$ or $WO_3 \cdot H_2O$, wolframic acid), meta-tungstic acid, and para-tungstic acid (isopoly-tungstic acid).
The tungstate used in the present invention is a salt of tungsten (VI) oxide and an oxide of an electropositive metal ($M^1$) represented by $xM^1_2O \cdot yWO_3 \cdot zH_2O$ (z can be 0) . Specific examples include ortho-tungstates (x:y = 1:1, $M^1_2WO_4$, tetraoxotungstates), meta-tungstates (y = 12, dihydrogendodecatungstates), and para-tungstates (y = 12, decahydrogendodecatungstates). Sodium tungstate and potassium tungstate, selected from these tungstates, can be suitably used because of their solubility in water. It is also possible to use an ammonium salt as the tungstate.
Any one of these tungstic acids (tungstates) can be used alone, and it is also possible to use two or more of them.

[Acrylic copolymer]

The acrylic copolymer used in the present invention is a copolymer of acrylic acid with 2-acrylamido-2-methylpropanesulfonic acid (AMPS).
The acrylic acid monomer content of the copolymer is 97% by mole or more. The acrylic acid monomer content as mentioned herein represents the proportion (% by mole) of the structural units derived from acrylic acid in the acrylic copolymer as determined with that of the structural units derived from all monomers constituting the acrylic copolymer as 100% by mole.
The acrylic copolymer with an acrylic acid monomer content of 97% or more provides a good anti-scaling effect without accelerating the corrosion of iron.
AMPS has an anti-scaling effect.
The weight-average molecular weight of the acrylic copolymer is usually in the range of 5,000 to 15,000, preferably 6,000 to 7,000. Any weight-average molecular weight of the acrylic copolymer falling out of this range leads to reduced anti-scaling effect. The weight-average molecular weights indicated above are standard polyacrylic acid equivalents according to gel permeation chromatography (GPC).
In the present invention, any single acrylic **copolymer** can be used alone, and it is also possible to use a combination of two or more acrylic copolymers with different weight-average molecular weights.
The method for producing the acrylic copolymer is not limited. The acrylic copolymer can be produced through the copolymerization of acrylic acid and a monomer having a sulfonic acid group, optionally with any other monomer, using a known radical polymerization process. The acrylic copolymer can be produced by, for example, dissolving acrylic acid and a monomer having a sulfonic acid group in water in a predetermined molar ratio, substituting the atmosphere with an inert gas, and performing aqueous solution polymerization at a polymerization temperature of 50 to 100°C using a water-soluble radical polymerization initiator, such as an azo or peroxide-based initiator.

[Water quality in the cooling water system]

The cooling water system treated in the present invention has an iron-made facility. Its water quality is not limited. However, it is usually a cooling water system having a calcium hardness of 30 to 300 mg-$CaCO_3$/L and a pH of approximately 7 to 9.

[Method for treating water in a cooling water system]

In the present invention, a tungstic acid (tungstate) and an acrylic copolymer are added to a cooling water system having such water quality to prevent the corrosion of iron and the formation of calcium-containing scales. The operational conditions are not limited. It is possible to use ordinary operational conditions.

The point where the tungstic acid (tungstate) and the acrylic copolymer are added is not limited either. The user can add these two chemicals at any point where the user wants to prevent the formation of scales or immediately upstream of the point.

The tungstic acid (tungstate) and the acrylic copolymer can be separately added in individual aqueous solutions, and can also be added in a single-liquid water treatment agent that contains both of them. The concentrations of the tungstic acid (tungstate) and the acrylic copolymer in the aqueous solutions are not limited. However, their concentrations are usually adjusted to approximately 1 to 50% by weight because of ease of handling and other considerations.

When the tungstic acid (tungstate) and the acrylic copolymer are added separately, it is preferred in exploiting the advantages of the present invention brought about by the use of these two chemicals in combination that the points where they are added be close to each other.

The quantities of the tungstic acid (tungstate) and the acrylic copolymer added to the cooling water system are added to make its concentration fall within the range of 5 to 600 mg/L, in particular, 15 to 150 mg/L. The acrylic copolymer is added to make its solid concentration fall within the range of 0.5 to 20 mg/L, in particular, 0.5 to 5.0 mg/L. Any quantities of the tungstic acid (tungstate) and the acrylic copolymer smaller than these ranges lead to insufficient anti-corrosion and anti-scaling effects. Any quantities exceeding these ranges do not have proportional effects, but rather are economically disadvantageous because of increased agent costs.

As for the ratio between the quantities of the tungstic acid (tungstate) and the acrylic copolymer, for exploiting the synergy between these two chemicals they are added to make the ratio by weight of the quantity of the acrylic copolymer to that of the tungstic acid (tungstate) fall within the range of 1:5 to 1:1500.

[Additional agents that can be used]

In the present invention, any other anti-scaling or anticorrosive agent or any slime-controlling agent can be optionally added in combination with the tungstic acid (tungstate) and the acrylic copolymer.

For example, it is possible to add an azole compound, such as tolyltriazole, benzotriazole, mercaptothiazole, or any of their derivatives, preferably benzotriazole, for improved anti-corrosion effect for copper material.

[Agent for treating water in a cooling water system]

An agent according to the present invention for treating water in a cooling water system is an agent for treating water in a cooling water system equipped with an iron-made facility and contains a tungstic acid (tungstate) and an acrylic copolymer.

The proportions of the tungstic acid (tungstate) and the acrylic copolymer in a water-treating agent according to the present invention are limited. As mentioned above, in exploiting the anti-scaling synergy between these two chemicals they are contained to make the ratio by weight of the acrylic copolymer to the tungstic acid (tungstate) fall within the range of 1:5 to 1500.

A water-treating agent according to the present invention contains the tungstic acid (tungstate) and the acrylic copolymer, and may also be a premix of them. A water-treating agent according to the present invention may be an aqueous solution, and may also be a powder.

A water-treating agent according to the present invention may contain any of the aforementioned additional agents that can be used.

EXAMPLES

The following describes the present invention in more detail by providing some examples.

[Scale prevention test]

1) Test method

A scale prevention test was conducted using the following procedure.

(i) Test waters (pH 8.0) were prepared with the water quality parameters specified in Table-1 by adding a solution of an acrylic (co)polymer, a solution of calcium chloride, a solution of sodium tungstate (Na tungstate), and a solution of sodium bicarbonate to 500 mL of purified water in a sealable bottle.
(ii) The test waters were left in a thermostat at 60°C for 20 h, and the calcium hardness values measured at the start and end of the test were used to calculate the percentage prevention of scale formation.

The samples at the end of the test were passed through a 0.1-$\mu$m filter before use.
The calculation formula is as follows.

$$\text{Percentage prevention of scale formation (\%) = 100 -}$$
$$\text{[\{Initial calcium hardness (mg-CaCO}_3\text{/L) - Final calcium}}$$
$$\text{hardness (mg-CaCO}_3\text{/L)\} / Initial calcium hardness (mg-}}$$
$$\text{CaCO}_3\text{/L)] } \times \text{ 100}$$

2) Test results

The test results are summarized in Table-1. Table-1 reveals the following.

1. Adding an acrylic (co)polymer having an acrylic monomer content of 97% or more resulted in 90% or more prevention of scale formation with no precipitate observed.
2. Adding no acrylic (co)polymer having an acrylic monomer content of 97% or more resulted in 70% or less prevention of scale formation with a white precipitate observed.

[Table 1]

Table-1: Scale prevention test

| Example | Quality of test water | | | | | | Percentage prevention of scale formation (%) |
|---|---|---|---|---|---|---|---|
| | Acrylic (co)polymer | | | | Na tungstate (mg/L) | Initial calcium hardness (mg-CaCO$_3$/L) | |
| | Monomer content (%) | | Weight-average molecular weight | Concentration added (mg/L) | | | |
| | Acrylic acid | AMPS | | | | | |
| Example 1* | 100 | 0 | 6,000 | 0.5 | 15 | 80 | 90 < |
| Example 2* | 100 | 0 | 6,000 | 0.5 | 600 | 80 | 90 < |
| Example 3 | 97 | 3 | 7,000 | 0.5 | 600 | 80 | 90 < |
| Comparative Example 1 | - | - | - | 0 | 0 | 80 | 70 > |
| Comparative Example 2 | - | - | - | 0 | 15 | 80 | 70 > |
| Comparative Example 3 | 90 | 10 | 4,500 | 0.5 | 600 | 80 | 90 < |
| Comparative Example 4 | 80 | 20 | 11,000 | 0.5 | 600 | 80 | 90 < |
| **\*useful for understanding the invention** | | | | | | | |

[Iron corrosion prevention test 1]

1) Test method

An iron corrosion prevention test was conducted using the following procedure.

(i) Test waters (pH 7.0) were prepared with the water quality parameters specified in Table-2 by adding a solution of sodium tungstate and a solution of an acrylic (co)polymer to 1000 mL of purified water in a 1-L beaker.

(ii) An iron test piece (SPCC) having dimensions of 50 mm $\times$ 30 mm $\times$ 1 mm and a surface area of 0.31 dm$^2$ was immersed in the 1-L beaker after degreasing with toluene. The beaker was then stirred at 250 rpm for 5 days in a stirrer-equipped thermostat at 50°C.

(iii) The signs of corrosion discolored spots caused by corrosion) on the test piece after the test were visually counted.

2) Test results

The test results are summarized in Table-2. Table-2 demonstrates that acrylic (co)polymers with an acrylic acid monomer content of 97% or more do not accelerate corrosion, whereas those with lower acrylic acid monomer content accelerate corrosion.

[Table 2]

Table-2: Iron material corrosion prevention test 1

| Example | Quality of test water | | | | | Corrosion spot count |
|---|---|---|---|---|---|---|
| | Acrylic (co)polymer | | | | Na tungstate (mg/L) | |
| | Monomer content (%) | | Weight-average molecular weight | Concentration added (mg/L) | | |
| | Acrylic acid | AMPS | | | | |
| Example 4* | 100 | 0 | 6,000 | 2.5 | 15 | 3 |
| Example 5 | 97 | 3 | 7,000 | 2.5 | 15 | 5 |
| Comparative Example 5 | - | - | - | 0 | 15 | 3 |
| Comparative Example 6 | 90 | 10 | 4,500 | 2.5 | 15 | 15 |
| Comparative Example 7 | 80 | 20 | 11,000 | 2.5 | 15 | 25 |
| *useful for understanding the invention | | | | | | |

[Iron corrosion prevention test 2]

1) Test method

A test was conducted in the same way as iron corrosion prevention test 1 except that acrylic (co)polymers having an acrylic acid monomer content of 97% or more were used and that the water quality parameters were as in Table-3.

2) Test results

The test results are summarized in Table-3. Table-3 demonstrates that the anti-corrosion effect is particularly high when the maintained concentration of the acrylic (co)polymer is in the range of 0.5 to 20 mg/L, in particular, 0.5 to 5.0 mg/L, and that of the tungstic acid (tungstate) is in the range of 5 to 600 mg/L, in particular, 15 to 150 mg/L.

[Table 3]

Table-3: Iron corrosion prevention test 2

| Example | Quality of test water | | | | Na tungstate (mg/L) | Corrosion spot count |
|---|---|---|---|---|---|---|
| | Acrylic (co)polymer | | | | | |
| | Monomer content (%) | | Weight-average molecular weight | Concentration added (mg/L) | | |
| | Acrylic acid | AMPS | | | | |
| Example 6* | 100 | 0 | 6,000 | 0.5 | 15 | 4 |
| Example 7* | 100 | 0 | 6,000 | 2.5 | 75 | 3 |
| Example 8* | 100 | 0 | 6,000 | 5.0 | 150 | 3 |
| Example 9 | 97 | 3 | 7,000 | 0.5 | 15 | 3 |
| Example 10 | 97 | 3 | 7,000 | 2.5 | 75 | 5 |
| Example 11 | 97 | 3 | 7,000 | 5.0 | 150 | 2 |
| Example 12* | 100 | 0 | 6.000 | 0.5 | 5 | 9 |
| Example 13* | 100 | 0 | 6,000 | 10 | 600 | 9 |
| Example 14* | 100 | 0 | 6,000 | 20 | 600 | 6 |
| Example 15 | 97 | 3 | 7,000 | 0.5 | 5 | 9 |
| Example 16 | 97 | 3 | 7,000 | 10 | 600 | 7 |
| Example 17 | 97 | 3 | 7,000 | 20 | 600 | 8 |
| *useful for understanding the invention | | | | | | |

**Claims**

1. A method for treating water in a cooling water system equipped with an iron-made facility, the method comprising a process of adding
tungstic acid and/or a tungstate; and
a copolymer of acrylic acid and 2-acrylamido-2-methylpropanesulfonic acid, the copolymer having an acrylic acid monomer content of 97% by mole or more,
to the cooling water system,
wherein the tungstic acid and/or tungstate and the acrylic copolymer are added to make the ratio by weight of the quantity of the acrylic copolymer to that of the tungstic acid and/or tungstate fall within the range of 1:5 to 1:1500, wherein the tungstic acid and/or the tungstate is maintained at a concentration of 5 to 600 mg/L in the cooling water system, and the acrylic copolymer is maintained at a concentration of 0.5 to 20 mg/L in the cooling water system.

2. The method according to Claim 1 for treating water in a cooling water system, wherein a weight-average molecular weight of the acrylic copolymer is in a range of 5,000 to 15,000.

**3.** An agent for treating water in a cooling water system equipped with an iron-made facility, the agent comprising tungstic acid and/or a tungstate ; and

a copolymer of acrylic acid and 2-acrylamido-2-methylpropanesulfonic acid, the copolymer having an acrylic acid monomer content of 97% by mole or more,

wherein the ratio by weight of the acrylic copolymer to the tungstic acid and/ or tungstate is within the range of 1:5 to 1500.

**Patentansprüche**

**1.** Methode zum Behandeln von Wasser in einem Kühlwassersystem, das mit einer Einrichtung aus Eisen ausgestattet ist, die Methode umfassend ein Verfahren des Zugebens

einer Wolframsäure und/oder Wolframate; und

eines Copolymers von Acrylsäure und 2-Acrylamido-2-Methylpropansulfonsäure, das Copolymer aufweisend einen Acrylsäuremonomergehalt von 97% pro Mol oder mehr,

zu dem Kühlwassersystem,

wobei die Wolframsäure und/oder Wolframate und das Acrylcopolymer hinzugegeben werden, um das Gewichtsverhältnis der Menge des Acrylcopolymers zu dem der Wolframsäure und/oder Wolframate in den Bereich von 1:5 bis 1:1500 fallend einzustellen, wobei die Wolframsäure und/oder die Wolframate bei einer Konzentration von 5 bis 600 mg/L in dem Kühlwassersystem aufrechterhalten wwird, und das Acrylcopolymer bei einer Konzentration von 0,5 bis 20 mg/L in dem Kühlwassersystem aufrechterhalten wird.

**2.** Methode nach Anspruch 1 zum Behandeln von Wasser in einem Kühlwassersystem, wobei ein gewichtsmittleres Molekulargewicht des Acrylcopolymers in dem Bereich von 5000 bis 15000 ist.

**3.** Ein Mittel zum Behandeln von Wasser in einem Kühlwassersystem, das mit einer Einrichtung aus Eisen ausgestattet ist, das Mittel umfassend

Wolframsäure und/oder ein Wolframate; und

ein Copolymer von Acrylsäure und 2-Acrylamido-2-methylpropansulfonsäure, das Copolymer aufweisend einen Acrylsäuremonomergehalt von 97% pro Mol oder mehr,

wobei das Gewichtsverhältnis des Acrylcopolymers zu der Wolframsäure und/oder Wolframate innerhalb des Bereichs von 1:5 zu 1500 ist.

**Revendications**

**1.** Méthode de traitement de l'eau dans un système d'eau de refroidissement équipé d'une infrastructure en fer, la méthode comprenant un procédé d'ajout

d'acide tungstique et/ou de tungstate ; et

d'un copolymère d'acide acrylique et d'acide 2-acrylamido-2-méthylpropanesulfonique, le copolymère ayant une teneur en monomère acide acrylique de 97 % en mole ou plus,

au système d'eau de refroidissement,

dans laquelle l'acide tungstique et/ou le tungstate et le copolymère acrylique sont ajoutés pour amener le rapport en poids de la quantité de copolymère acrylique à celle de l'acide tungstique et/ou du tungstate à s'inscrire dans la plage de 1:5 à 1:1500, où l'acide tungstique et/ou le tungstate est maintenu à une concentration de 5 à 600 mg/L dans le système d'eau de refroidissement, et le copolymère acrylique est maintenu à une concentration de 0,5 à 20 mg/L dans le système d'eau de refroidissement.

**2.** Méthode de traitement de l'eau dans un système d'eau de refroidissement selon la revendication 1, dans laquelle un poids moléculaire moyen en poids du copolymère acrylique est dans une plage de 5 000 à 15 000.

**3.** Agent de traitement de l'eau dans un système d'eau de refroidissement équipé d'une infrastructure en fer, l'agent comprenant

de l'acide tungstique et/ou un tungstate ; et

un copolymère d'acide acrylique et d'acide 2-acrylamido-2-méthylpropanesulfonique, le copolymère ayant une teneur en monomère acide acrylique de 97 % en mole ou plus,

dans lequel le rapport en poids du copolymère acrylique à l'acide tungstique et/ou au tungstate est dans la plage de 1:5 à 1:1500.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1621362 A
- CN 102730848 A
- JP 2003329388 A
- JP 3925296 B
- JP 4704835 B